# EUROPEAN PATENT SPECIFICATION

(11) **EP 3 179 754 B1**
(45) Date of publication and mention of the grant of the patent: **21.11.2018**
(21) Application number: 14900932.6
(22) Date of filing: 29.08.2014
(51) Int. Cl.: H04W 8/02, H04W 84/04

(54) **CONTROLLING E-UTRA CAPABILITY OF USER EQUIPMENT IN A VISITED NETWORK**
STEUERUNG DER E-UTRA-FÄHIGKEIT EINES BENUTZERGERÄTS IN EINEM BESUCHTEN NETZ
COMMANDE DE LA CAPACITÉ E-UTRA D'UN ÉQUIPEMENT D'UTILISATEUR DANS UN RÉSEAU VISITÉ

(43) Date of publication of application: 14.06.2017
(73) Proprietor: Huawei Technologies Co., Ltd., Longgang District Shenzhen, Guangdong 518129 (CN)
(72) Inventor: SHU, Lin, Shenzhen Guangdong 518129 (CN); SHI, Shufeng, Shenzhen Guangdong 518129 (CN)
(74) Representative: Thun, Clemens
(86) International application number: PCT/CN2014/085552
(87) International publication number: WO 2016/029443

(56) References cited:
- EP-A1- 2 194 744
- EP-A1- 2 418 880
- EP-A1- 2 523 525
- CN-A- 101 448 320
- CN-A- 102 388 636
- CN-A- 103 262 512
- CN-A- 103 986 737
- US-A1- 2012 289 151
- US-A1- 2013 259 004
- US-A1- 2013 315 072

## Description

### TECHNICAL FIELD

The present invention relates to the communications field, and in particular, to a method for controlling an evolved universal mobile telecommunications system territorial radio access (E-UTRA) capability of user equipment, an apparatus, and a system.

### BACKGROUND

With development of mobile communications technologies, based on a second-generation mobile communications network (2G network) and a third-generation mobile communications network (3G network), an evolved packet system (EPS) is provided. The EPS includes an evolved universal mobile telecommunications system territorial radio access network (E-UTRAN) and an evolved packet core EPC).

For example, EP 2 418 880 A1 refers to a mobile communication method comprising, a step in which a mobile station transmits a first location registration request signal including capability information indicating that it is compatible with a second radio access network, to a mobile switching center housing a first radio access network, a step in which the mobile switching center transmits a location registration rejection signal, which includes information indicating that communication using a second radio access network is not allowed, to the mobile station, a step in which the mobile station transmits a second location registration request signal, which includes capability information indicating that it is not compatible with the second radio access network, to the mobile switching center in response to the location registration rejection signal and a step in which the mobile switching center performs a location registration process with respect to the first radio access network of the mobile station in response to the second location registration request signal.

Further, EP 2 523 525 A1 refers to a mobile terminal being instructed to be redirected from a UMTS cell to an LTE cell by a radio control apparatus (RNC), in an overlapped area between the UMTS cell in which communication with a UMTS system is available and the LTE cell in which communication with an LTE system is available, by transmitting a connection request signal including an LTE supported identifier for indicating that the LTE system is supported to the radio control apparatus (RNC) of the UMTS system. Moreover, the mobile terminal (UE) includes a connection setting process unit which executes a connection setting process with the radio control apparatus (RNC) while being turned into a state of not supporting the LTE system, when receiving a location registration failure signal for indicating that location registration to the tracking area of the LTE system is ended in failure.

Further, US 2013/0259004 A1 refers to a mobile communication method including the steps of: transmitting, by a UE, "Attach Request" for E-UTRAN; transmitting, by an MME, "Attach Reject" in which "#15" is set as "Cause value" to the UE when the MME determines that the UE cannot be connected to a desired external network and determines that the UE can utilize CS communications, upon receipt of the "Attach Request;" and transmitting, by the UE, "Attach Request" for UTRAN/GERAN when the UE receives the "Attach Reject" in which "#15" is set as "Cause value."

Further, US 2012/0289151 A1 refers to a method of handling attach procedure for a mobile device in a wireless communication system is disclosed. The method comprises performing an attach procedure to a network of the wireless communication system, receiving an attach reject message of the attach procedure including a reject reason associated to an access point name (APN) setting of the mobile device, from the network, and displaying a notification message in response to the received attach reject message.

Further, EP 2 194 744 A1 refers to a method of setting radio access capability for a mobile device capable of a plurality of radio access technologies includes utilizing a first one of the radio access technologies to send subscribing information of the mobile device to a network, receiving a reject message corresponding to the subscribing information from the network, selecting a second radio access technology from the plurality of radio access technologies, and sending the subscribing information according to the second radio access technology.

When user equipment (UE) registers with a mobile communications network, a home subscriber server (HSS) that serves the UE usually needs to configure subscription data of the mobile communications network for the UE. In a roaming scenario, to successfully register with a mobile communications network of a roaming location by the UE, a roaming agreement needs to be subscribed between a home operator of the UE and a visited operator of the roaming location of the UE. Typically, if only a roaming agreement of a 2G/3G network instead of a roaming agreement of an E-UTRAN is subscribed between the home operator of the UE and the visited operator of the roaming location of the UE, the UE that supports registration with both the 2G/3G network and the E-UTRAN can register with only the 2G/3G network of the roaming location, instead of registering with the E-UTRAN of the roaming location. In this case, when the UE initiates registration with the E-UTRAN of the roaming location, an EPC of the roaming location returns a reason value to reject the registration of the UE, and after receiving the reason value, the UE attempts to initiate registration with the 2G/3G network of the roaming location. The 2G/3G network of the roaming location and the E-UTRAN of the roaming location are visited networks of the UE in the roaming location.

However, after the foregoing UE that supports registration with both the 2G/3G network and the E-UTRAN registers with the 2G/3G network of the roaming location, the UE periodically attempts to initiate registration with the E-UTRAN because the UE has an E-UTRA capability, and the UE may also be handed over or redirected back to the E-UTRAN from the 2G/3G network. After the UE enters the E-UTRAN, E-UTRAN registration initiated by the UE is rejected again by the EPC by using the foregoing reason value, and the UE attempts to initiate registration with the 2G/3G network of the roaming location again. In this way, the UE is always handed over between the 2G/3G network and the E-UTRAN. Consequently, a ping-pong effect occurs on the UE.

### SUMMARY

The invention is set out in the appended set of claims.

Any references in the following description to embodiments, objects, aspects and/or examples which are not covered by the appended claims are considered as not being part of the present invention.

Embodiments of the present invention provide a method for controlling an E-UTRA capability of user equipment, an apparatus, and a system, so that a problem of a ping-pong effect occurring on UE is resolved, and the ping-pong effect occurring on the UE can be avoided by disabling an E-UTRA capability of the UE.

To achieve the foregoing objective, the following technical solutions are used in the present invention:
In a first aspect a method for controlling an evolved universal mobile telecommunications system territorial radio access, E-UTRA, capability of a user equipment, UE, performed by the UE is provided, the method comprising:
**a.)** sending an attach request message or a location update request message carrying identity information of the UE to a mobility management entity, MME, in a visited network, wherein the attach request message and the location update request message are used to request registering with an evolved universal mobile telecommunication system territorial radio access network, E-UTRAN, in the visited network in which the UE is located;
**b.)** receiving an attach reject message or a location update reject message, wherein the attach reject message and the location update reject message carry indication information sent by the MME in the visited network, wherein the indication information is used to instruct to disable the E-UTRA capability of the UE;
**c.)** determining whether a management object, MO, parameter is configured for the UE, wherein the MO parameter is used to indicate whether disabling of the E-UTRA capability of the UE is allowed,
   **c1.)** in case of yes in step **c.)**, determining whether the MO parameter is used to indicate that disabling of the E-UTRA capability of the UE is not allowed;
   **c2.)** in case of yes in step **c1.**) or if no in step **c.)**, disabling the E-UTRA capability of the UE according to the indication information.

In a first implementation form of the first aspect the indication information is used to instruct to disable the E-UTRA capability of the UE in the visited network; and the disabling the E-UTRA capability of the UE according to the indication information comprises:
∘ disabling the E-UTRA capability of the UE in the visited network according to the indication information;
wherein the method further comprises:
enabling the E-UTRA capability of the UE according to the indication information when the UE moves to an equivalent public land mobile network, PLMN, of the UE, wherein the equivalent PLMN of the UE refers to a PLMN included in an equivalent PLMN list stored by the UE and for the UE, all PLMNs in the equivalent PLMN list are equivalent when network selection, network reselection, cell selection, and cell reselection are to be performed.
In a second aspect a user equipment, UE, comprising means configured to perform the steps of any of the above methods is provided.

The embodiments of the present invention provide a method for controlling an E-UTRA capability of UE, an apparatus, and a system. According to the solution, when UE fails to register with a visited network in which the UE is located, an MME may obtain reason information indicating why the UE fails to register with the visited network, determine, according to the reason information, indication information corresponding to the reason information, and send the indication information to the UE, so as to instruct the UE to disable an E-UTRA capability of the UE, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In the embodiments of the present invention, after the UE fails to register with the E-UTRAN in the visited network, the ping-pong effect occurring on the UE can be avoided by disabling the E-UTRA capability of the UE.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention.
FIG. 1 is a flowchart of a method for controlling an E-UTRA capability of UE according to an embodiment of the present invention;
FIG. 2 is a flowchart of a method for controlling an E-UTRA capability of UE according to an embodiment of the present invention;
FIG. 3 is a flowchart of a method for controlling an E-UTRA capability of UE according to an embodiment of the present invention;
FIG. 4 is an interaction diagram of a method for controlling an E-UTRA capability of UE according to an embodiment of the present invention;
FIG. 5A and FIG. 5B are an interaction diagram of a method for controlling an E-UTRA capability of UE according to an embodiment of the present invention;
FIG. 6A and FIG. 6B are an interaction diagram of a method for controlling an E-UTRA capability of UE according to an embodiment of the present invention;
FIG. 7 is a flowchart of another method for controlling an E-UTRA capability of UE according to an embodiment of the present invention;
FIG. 8 is a flowchart of another method for controlling an E-UTRA capability of UE according to an embodiment of the present invention;
FIG. 9 is a schematic structural diagram of an MME according to an embodiment of the present invention;
FIG. 10 is a schematic diagram of a hardware structure of an MME according to an embodiment of the present invention;
FIG. 11 is a schematic structural diagram of UE according to an embodiment of the present invention;
FIG. 12 is a schematic diagram of a hardware structure of UE according to an embodiment of the present invention;
FIG. 13 is a schematic structural diagram of an HSS according to an embodiment of the present invention;
FIG. 14 is a schematic diagram of a hardware structure of an HSS according to an embodiment of the present invention;
FIG. 15 is a schematic structural diagram of another MME according to an embodiment of the present invention;
FIG. 16 is a schematic diagram of a hardware structure of another MME according to an embodiment of the present invention;
FIG. 17 is another schematic structural diagram of UE according to an embodiment of the present invention;
FIG. 18 is another schematic diagram of a hardware structure of UE according to an embodiment of the present invention; and
FIG. 19 is a schematic diagram of a communications system according to an embodiment of the present invention.

### DESCRIPTION OF EMBODIMENTS

The character "/" in the following embodiments generally indicates an "or" relationship between associated objects.

The following clearly describes the technical solutions in the embodiments of the present invention with reference to the accompanying drawings in the embodiments of the present invention. Apparently, the described embodiments are merely some but not all of the embodiments of the present invention.

In the embodiments of the present invention, UE may be any one of the following, and the UE may be static or dynamic. The UE may include but is not limited to: a station (, a mobile station, a subscriber unit, a personal computer, a laptop computer, a tablet computer, a netbook, a terminal, a cellular phone, a handheld device, a cordless phone, a personal digital assistant (PDA), a data card, a Universal Serial Bus (USB) insertion device, a mobile WiFi hotspot device (MiFi Devices), an intelligent watch, intelligent glasses, a wireless modem, a wireless router, a wireless local loop (WLL) station, and the like. The foregoing UE may be distributed in an entire wireless network.

### Embodiment 1

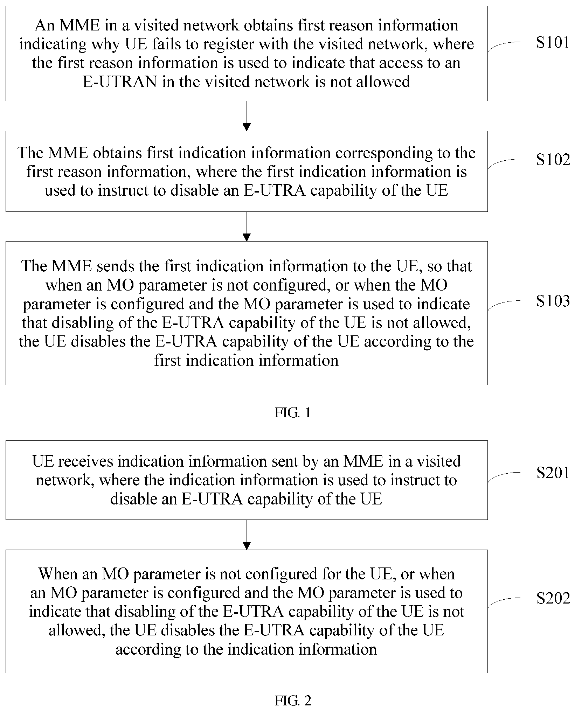

This embodiment of the present invention provides a method for controlling an E-UTRA capability of UE. As shown in FIG. 1, the method may include the following steps:
S101. A mobility management entity (MME) in a visited network obtains first reason information indicating why UE fails to register with the visited network, where the first reason information is used to indicate that access to an E-UTRAN in the visited network is not allowed.
S102. The MME obtains first indication information corresponding to the first reason information, where the first indication information is used to instruct to disable an E-UTRA capability of the UE.
S103. The MME sends the first indication information to the UE, so that when a management object (MO) parameter is not configured, or when the MO parameter is configured and the MO parameter is used to indicate that disabling of the E-UTRA capability of the UE is not allowed, the UE disables the E-UTRA capability of the UE according to the first indication information.

In this embodiment of the present invention, the visited network refers to a network with which the UE is currently attempting to register, or a network with which the UE has currently registered successfully. If the UE is located in a home location, the visited network is a network provided by a home operator of the UE for the UE, and in this case, the visited network may be understood as a home network of the UE. If the UE is located in a roaming location, the visited network is a network provided by an operator of the roaming location of the UE for the UE. When the UE needs to access the visited network in the roaming location, the UE first needs to register with the visited network.

In a typical scenario, it is assumed that the visited network includes a 2G/3G network and the E-UTRAN, and only a roaming agreement of the 2G/3G network instead of a roaming agreement of the E-UTRAN is subscribed between the home operator of the UE and the visited operator of the roaming location in which the UE is located. If the UE supports registration with both the 2G/3G network and the E-UTRAN, when the UE chooses to initiate registration with the E-UTRAN of the roaming location, the UE may send an attach request message or a location update request message to the MME in the visited network. After the MME receives the attach request message or the location update request message, the MME may identify, according to identity information of the UE that is carried in the attach request message or the location update request message, that the UE is UE that enters the visited network in a roaming manner, and the MME sends an update location request message to an HSS in the home network of the UE to obtain subscription data of the UE. Because an agreement of roaming from the home network to the E-UTRAN in the visited network is not configured in the HSS, the HSS does not have the subscription data of the UE. Therefore, the HSS sends, to the MME by replying to the update location request message with an update location answer message, the first reason information indicating why the UE fails to register with the visited network, so as to notify the MME that the UE is not allowed to register with the E-UTRAN in the visited network, that is, the UE fails to register with the visited network. After the MME obtains the first reason information indicating why the UE fails to register with the visited network, the MME may obtain, according to the first reason information, the first indication information corresponding to the reason information, so as to instruct the UE to disable the E-UTRA capability of the UE. The MME sends the first indication information to the UE, so that when the MO parameter is not configured, or when the MO parameter used to indicate that disabling of the E-UTRA capability of the UE is not allowed is configured, the UE can disable the E-UTRA capability of the UE according to the first indication information. The update location request message carries the identity information of the UE, an identity of the visited network, and a type of an access technology used by the UE in the visited network, and the update location answer message is an update location answer message that is for the UE and that corresponds to the update location request message. For example, the identity information of the UE may be an international mobile subscriber identity (IMSI) of the UE or a globally unique temporary identity (GUTI) of the UE. The identity of the visited network may be a public land mobile network identity (PLMN ID). The type of the access technology may be an E-UTRAN.

Specially, in the method for controlling an E-UTRA capability of UE provided in this embodiment of the present invention, the MME is an MME in the visited network in which the UE is located, and the HSS is an HSS in the home network of the UE. It may be understood that if the visited network in which the UE is located is the home network of the UE, both the MME and the HSS are located in the home network.

Optionally, the first indication information sent by the foregoing MME to the UE may be used to instruct to disable the E-UTRA capability of the UE, so that the UE disables the E-UTRA capability of the UE; or the first indication information may be used to instruct to disable the E-UTRA capability of the UE in the visited network, so that the UE disables the E-UTRA capability of the UE in the visited network, and enables the E-UTRA capability of the UE in an equivalent PLMN of the UE.

Further, when the first indication information is used to instruct to disable the E-UTRA capability of the UE, the first indication information indicates disabling the E-UTRA capability of the UE in terms of a device granularity of the UE. For example, the E-UTRA capability of the UE can be re-enabled only after the UE performs network selection again, or a universal subscriber identity module (USIM) in the UE is removed and inserted, or the UE is powered off and powered on. However, the E-UTRA capability of the UE is still disabled when a change other than the foregoing several cases occurs on the UE. For example, the UE still disables the E-UTRA capability of the UE when performing cell reselection and moving to the equivalent PLMN of the UE. When the first indication information is used to instruct to disable the E-UTRA capability of the UE in the visited network, the first indication information indicates disabling the E-UTRA capability of the UE in terms of a network granularity. For example, the E-UTRA capability of the UE is disabled only in the visited network with which the UE currently registers, and when the UE performs cell reselection and moves to the equivalent PLMN of the UE, the E-UTRA capability of the UE is enabled again.

It should be noted that the equivalent PLMN of the UE refers to a PLMN included in an equivalent PLMN list stored by the UE. For the UE, all PLMNs in the equivalent PLMN list are equivalent when network selection, network reselection, cell selection, and cell reselection are being performed.

It should be noted that in the method for controlling an E-UTRA capability of UE provided in this embodiment of the present invention, a method for obtaining, by the MME, the first reason information indicating why the UE fails to register with the visited network includes but is not limited to the foregoing method for obtaining, by the MME, the first reason information from the HSS in the home network of the UE. Specifically, the method for obtaining the first reason information by the MME may be one of the following:
(1) The first reason information may be obtained by the MME according to configuration information of the MME.
(2) The first reason information may be obtained from the HSS in the home network of the UE by the MME.

In (1), after the MME obtains the first reason information from the configuration information of the MME, the MME may obtain, according to the first reason information, the first indication information corresponding to the first reason information. Specifically, the MME may send the first reason information to the HHS, and the HSS responds to the MME with the first indication information according to the first reason information; or the MME may obtain the first indication information from the configuration information of the MME according to the first reason information.

In (2), after the MME obtains the first reason information from the HSS, the MME may obtain the first indication information from the HSS; or the MME may obtain the first indication information from the configuration information of the MME according to the first reason information.

Optionally, the MME may further send second reason information to the UE. The second reason information may be the first reason information, or may be obtained by mapping the first reason information. The second reason information sent by the MME to the UE may include a reason value 15 and an extended reason value. The reason value 15 may be defined as "no suitable cell in a tracking area", and the extended reason value may be defined as "access to the E-UTRAN not allowed (E-UTRAN not allowed)". The foregoing "no suitable cell" indicates that no cell that can serve the UE exists in the visited network because no roaming agreement of the E-UTRAN is subscribed between the visited network and the home network of the UE. Specially, the second reason information may be used to notify the UE that the UE is not allowed to register with the E-UTRAN in the visited network.

Optionally, the MME may send the first indication information to the UE by using an attach reject message/location update reject message.

Further, when the MME sends both the second reason information and the first indication information to the UE, the MME may send at least one of the first indication information or the second reason information to the UE by using the attach reject message/location update reject message. That is, the MME may add the second reason information to the attach reject message/location update reject message and send the second reason information to the UE, and add the first indication information to another message and send the first indication information to the UE; or the UE may add the first indication information to the attach reject message/location update reject message and send the first indication information to the UE, and add the second reason information to another message and send the second reason information to the UE; or the UE may add both the second reason information and the first indication information to the attach reject message/location update reject message and send both the second reason information and the first indication information to the UE.

Optionally, the MME may also obtain second indication information sent by the HSS. The second indication information corresponds to the first reason information and the first indication information. The second indication information may be used to indicate: disabling of the E-UTRA capability of the UE is allowed; or disabling of the E-UTRA capability of the UE is not allowed; or the second indication information is empty.

In a possible implementation manner, the first indication information is the same as the second indication information. In this case, after the MME obtains the second indication information from the HSS, the MME uses the second indication information as the first indication information and sends the second indication information to the UE.

In another possible implementation manner, the first indication information is different from the second indication information. In this case, after the MME obtains the second indication information from the HSS, the MME maps, according to the second indication information and a correspondence between the second indication information and the first indication information, the second indication information to the first indication information and sends the first indication information to the UE.

Further, that the second indication information is empty may mean: the second indication information carries no indication information; or the second indication information carries a default value, such as 00, that is, it may be considered that the second indication information carries no indication information. When the second indication information is empty, it indicates that the home network configures, in the HSS, the E-UTRA capability of the UE not to be limited in the visited network, and the visited network determines whether to disable the E-UTRA capability of the UE. When the second indication information is that disabling of the E-UTRA capability of the UE is allowed, it indicates that the home network configures, in the HSS, disabling of the E-UTRA capability of the UE to be allowed in the visited network. When the second indication information is that disabling of the E-UTRA capability of the UE is not allowed, it indicates that the home network configures, in the HSS, disabling of the E-UTRA capability of the UE not to be allowed in the visited network.

Optionally, in the foregoing S102, there are two possible implementation manners of obtaining, by the MME according to the first reason information, the first indication information corresponding to the first reason information:
Manner 1: The MME obtains, according to the first reason information, the second indication information corresponding to the first indication information, and obtains the first indication information according to the second indication information and the correspondence between the second indication information and the first indication information.

The first indication information obtained by the MME according to the second indication information and the correspondence between the second indication information and the first indication information may be one of the following:
(1) If the second indication information is empty, the first indication information obtained by the MME according to the second indication information is disabling the E-UTRA capability of the UE.
(2) If the second indication information is that disabling of the E-UTRA capability of the UE is allowed, the first indication information obtained by the MME according to the second indication information is disabling the E-UTRA capability of the UE.
(3) If the second indication information is that disabling of the E-UTRA capability of the UE is not allowed, the first indication information obtained by the MME according to the second indication information is allowing disabling the E-UTRA capability of the UE in the visited network.

Optionally, in (3), if the second indication information is that disabling of the E-UTRA capability of the UE is not allowed, the first indication information obtained by the MME according to the second indication information may be not allowing disabling the E-UTRA capability of the UE.

Manner 2: The MME obtains, according to the first reason information, the first indication information corresponding to the first reason information. Specifically, the MME may determine the first indication information from the configuration information of the MME according to the first reason information. The configuration information of the MME may be that the visited network configures, according to a policy of the visited network, whether the UE disables the E-UTRA capability of the UE in the visited network when a registration failure reason value is the first reason information. For example, for the UE that enters the visited network in a roaming manner, if the first reason information is that the UE is not allowed to register with the E-UTRAN in the visited network, it may be configured in the MME that the first indication information is disabling the E-UTRA capability of the UE.

It should be noted that if the second indication information is configured in the HSS for the UE, the MME may obtain, from the HSS, the first reason information indicating why the UE fails to register and the second indication information, and obtain, according to the second indication information, the first indication information corresponding to the second indication information. The process corresponds to the foregoing manner 1. If the second indication information is not configured in the HSS for the UE, the MME may obtain, from the HSS, the first reason information indicating why the UE fails to register, and obtain the first indication information from the configuration information of the MME according to the first reason information. The process corresponds to the foregoing manner 2.

This embodiment of the present invention provides a method for controlling an E-UTRA capability of UE. As shown in FIG. 2, the method may include the following steps:
S201. UE receives indication information sent by an MME in a visited network, where the indication information is used to instruct to disable an E-UTRA capability of the UE.
S202. When an MO parameter is not configured for the UE, or when the MO parameter is configured and the MO parameter is used to indicate that disabling of the E-UTRA capability of the UE is not allowed, the UE disables the E-UTRA capability of the UE according to the indication information.

Referring to related descriptions in the foregoing embodiment shown in FIG. 1, after the UE fails to register with the visited network (for example, a visited network of a roaming location), an HSS in a home network may send, to the MME, reason information indicating why the UE fails to register with the visited network. After the MME receives the reason information, the MME may determine, according to the reason information, the indication information corresponding to the reason information, and sends the indication information to the UE, so as to instruct the UE to disable the E-UTRA capability of the UE. After the UE receives the indication information sent by the MME, when the MO parameter is not configured for the UE, or when the MO parameter is configured and the MO parameter is used to indicate that disabling of the E-UTRA capability of the UE is not allowed, the UE may disable the E-UTRA capability of the UE according to the indication information. The reason information in this embodiment of the present invention may be understood as the second reason information in the embodiment shown in FIG. 1, and the indication information in this embodiment of the present invention may be understood as the first indication information in the embodiment shown in FIG. 1.

Optionally, the reason information is used to notify the UE that the UE is not allowed to register with an E-UTRAN in the visited network; and the indication information may be used to instruct to disable the E-UTRA capability of the UE; or the indication information may be used to instruct to disable the E-UTRA capability of the UE in the visited network.

Specifically, the UE may learn, according to the reason information, that the UE is not allowed to register with the E-UTRAN in the visited network, and may disable the E-UTRA capability of the UE according to the indication information.

A method for disabling the E-UTRA capability of the UE by the UE according to the indication information may be one of the following:
(1) If the indication information is used to instruct to disable the E-UTRA capability of the UE, the UE may disable the E-UTRA capability of the UE according to the indication information.
(2) If the indication information is used to instruct to disable the E-UTRA capability of the UE in the visited network, the UE may disable the E-UTRA capability of the UE in the visited network, and enable the E-UTRA capability of the UE in an equivalent PLMN of the UE, according to the indication information.

In the method for controlling an E-UTRA capability of UE provided in this embodiment of the present invention, when a home network does not configure, in an HSS, a roaming agreement for allowing UE to register with an E-UTRAN in a visited network, the visited network rejects registration of the UE with the E-UTRAN in the visited network. Therefore, the UE may select another network (such as a 2G/3G network) in the visited network for registration. After the UE registers with the another network in the visited network, because the UE disables an E-UTRA capability of the UE, it can be ensured that the UE camps on the another network in the visited network for a long time, thereby resolving a prior-art problem that is of a ping-pong effect and is caused by the following: After the UE registers with the another network in the visited network, the UE returns to the E-UTRAN again, the UE initiates registration with the E-UTRAN, then the registration is rejected by the visited network again, and therefore, the UE is constantly handed over between the two networks.

In this embodiment of the present invention, the reason information indicating why the UE fails to register with the visited network in which the UE is located may be used to indicate that no roaming agreement for allowing the UE to register with the E-UTRAN in the visited network is configured in the HSS. The reason information sent by the MME to the UE may include a reason value 15 and an extended reason value. For descriptions of the reason value 15 and the extended reason value, refer to related descriptions of the reason value 15 and the extended reason value in the foregoing embodiment shown in FIG. 1. Details are not described herein again.

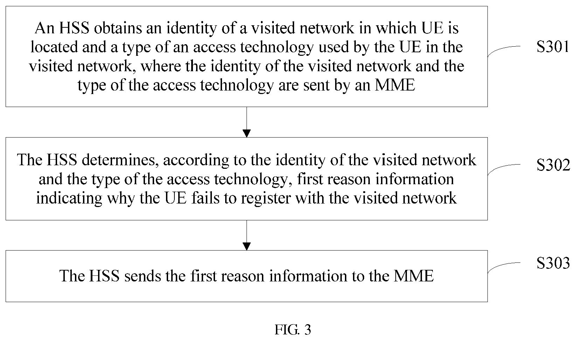

This embodiment of the present invention provides a method for controlling an E-UTRA capability of UE. As shown in FIG. 3, the method may include the following steps:
S301. An HSS obtains an identity of a visited network in which UE is located and a type of an access technology used by the UE in the visited network, where the identity of the visited network and the type of the access technology are sent by an MME.
S302. The HSS determines, according to the identity of the visited network and the type of the access technology, first reason information indicating why the UE fails to register with the visited network.
S303. The HSS sends the first reason information to the MME.

Referring to related descriptions in the foregoing embodiment shown in FIG. 1 and FIG. 2, when the UE registers with the visited network of a roaming location, the MME in the visited network requests subscription data of the UE from the HSS in a home network of the UE. Specifically, the MME sends an update location request message to the HSS. The update location request message carries the identity of the visited network and the type of the access technology used by the UE in the visited network. The HSS determines, according to the identity of the visited network and the type of the access technology, that no subscription data of the UE exists in the HSS, that is, the UE fails to register with the visited network, so that the HSS determines the first reason information indicating why the UE fails to register with the visited network, and sends the first reason information to the MME.

Specifically, that the HSS determines, according to the identity of the visited network and the type of the access technology, the first reason information indicating why the UE fails to register with the visited network may include the following:
(1) The HSS determines, according to the identity of the visited network and the type of the access technology, whether a roaming agreement for allowing the UE to register with an E-UTRAN in the visited network is configured in the HSS.
(2) If no roaming agreement for allowing the UE to register with the E-UTRAN in the visited network is configured in the HSS, the HSS determines the first reason information indicating why the UE fails to register with the visited network.

Further, if no roaming agreement for allowing the UE to register with the E-UTRAN in the visited network is configured in the HSS, the HSS may configure the second indication information indicating whether disabling of the E-UTRA capability of the UE is allowed after an attempt to access the E-UTRAN in the visited network by the UE is rejected.

For example, in (2), the HSS may determine that a reason that the UE fails to register with the visited network is: no roaming agreement for allowing the UE to register with the E-UTRAN in the visited network is configured in the HSS, that is, the UE is not allowed to access the E-UTRAN in the visited network.

Optionally, the first reason information is the first reason information described in the embodiment shown in FIG. 1, and the second indication information is the second indication information described in the embodiment shown in FIG. 1. For descriptions of the first reason information and the second indication information, refer to related descriptions of the first reason information and the second indication information in the embodiment shown in FIG. 1. Details are not described herein again.

This embodiment of the present invention provides a method for controlling an E-UTRA capability of UE. According to the solution, when UE fails to register with a visited network in which the UE is located, an MME may obtain first reason information indicating why the UE fails to register with the visited network, determine, according to the first reason information, first indication information corresponding to the first reason information, and send the first indication information to the UE, so as to instruct the UE to disable an E-UTRA capability according to the first indication information when an MO parameter is not configured, or when an MO parameter used to indicate that the UE is not allowed to disable the E-UTRA capability of the UE is configured, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

### Embodiment 2

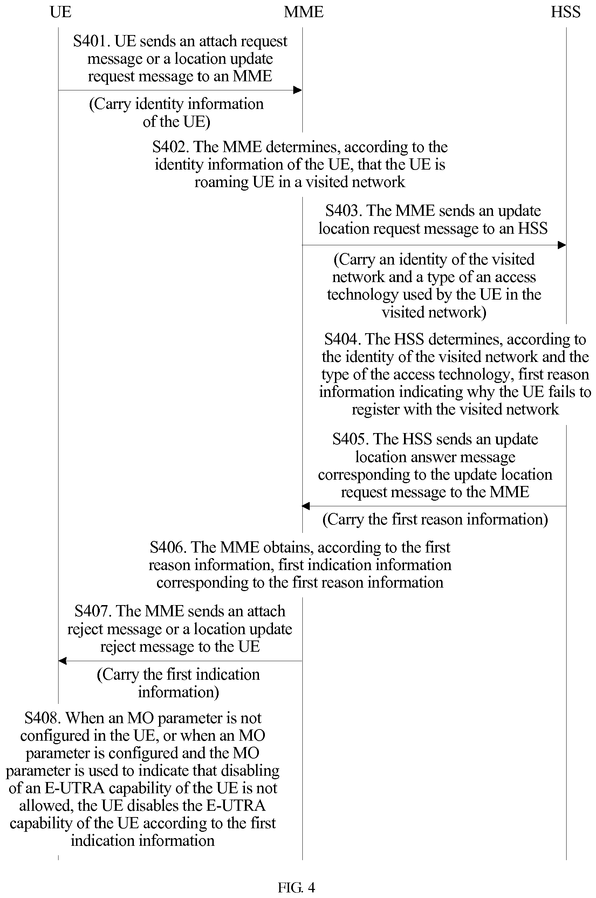

This embodiment of the present invention provides a method for controlling an E-UTRA capability of UE. As shown in FIG. 4, the method may include the following steps:
S401. UE sends an attach request message or a location update request message to an MME, where the attach request message or the location update request message is used to request to register with an E-UTRAN in a visited network in which the UE is located, and the attach request message or the location update request message carries identity information of the UE.
S402. The MME determines, according to the identity information of the UE, that the UE is roaming UE in the visited network.
S403. The MME sends an update location request message to an HSS, where the update location request message carries an identity of the visited network and a type of an access technology used by the UE in the visited network.
S404. The HSS determines, according to the identity of the visited network and the type of the access technology, first reason information indicating why the UE fails to register with the visited network.
S405. The HSS sends an update location answer message corresponding to the update location request message to the MME, where the update location answer message carries the first reason information.
S406. The MME obtains, according to the first reason information, first indication information corresponding to the first reason information, where the first indication information is used to instruct to disable an E-UTRA capability of the UE.
S407. The MME sends an attach reject message or a location update reject message to the UE, where the attach reject message or the location update reject message carries the first indication information.
S408. When an MO parameter is not configured in the UE, or when the MO parameter is configured and the MO parameter is used to indicate that disabling of the E-UTRA capability of the UE is not allowed, the UE disables the E-UTRA capability of the UE according to the first indication information.

In this embodiment of the present invention, for descriptions of the visited network, refer to related descriptions of the visited network in the foregoing embodiment shown in FIG. 1. Details are not described herein again.

If the UE sends the attach request message to the MME in the foregoing S401, the MME sends the attach reject message to the UE in the foregoing S407; or if the UE sends the location update request message to the MME in the foregoing S401, the MME sends the location update reject message to the UE in the foregoing S407.

In a typical scenario, it is assumed that the visited network includes a 2G/3G network and the E-UTRAN, and only a roaming agreement of the 2G/3G network instead of a roaming agreement of the E-UTRAN is subscribed between a home operator of the UE and a visited operator of a roaming location in which the UE is located. If the UE supports registration with both the 2G/3G network and the E-UTRAN, when the UE chooses to initiate registration with the E-UTRAN of the roaming location, in this embodiment of the present invention, the UE sends the attach request message or the location update request message to the MME in the visited network, and the MME determines, according to the identity information of the UE that is carried in the attach request message or the location update request message, that the UE is roaming UE in the visited network, and sends the update location request message to the HSS in a home network of the UE, so as to request subscription data of the UE from the HSS. The HSS determines, according to the identity of the visited network and the type of the access technology used by the UE in the visited network that are carried in the update location request message, the first reason information indicating why the UE fails to register with the visited network, and sends the update location answer message corresponding to the update location request message to the MME. The update location answer message carries the first reason information. The MME obtains, according to the first reason information, the first indication information corresponding to the first reason information. The first indication information may be used to instruct the UE to disable the E-UTRA capability of the UE. The MME sends the attach reject message or the location update reject message to the UE. The attach reject message or the location update reject message carries the first indication information. After the UE receives the first indication information, the UE may disable the E-UTRA capability of the UE according to the first indication information when the management object MO parameter is not configured for the UE, or when the MO parameter is configured and the MO parameter is used to indicate that disabling of the E-UTRA capability of the UE is not allowed. The attach request message or the location update request message carries the identity information of the UE. The update location request message carries the identity information of the UE, such as a GUTI of the UE or an IMSI of the UE, the identity of the visited network, and the type of the access technology used by the UE in the visited network. Specifically, for descriptions of the identity information of the UE, the identity of the visited network, and the type of the access technology used by the UE in the visited network, refer to related descriptions in the embodiment shown in FIG. 1. Details are not described herein again.

Specifically, the HSS determines, according to the identity of the visited network and the type of the access technology, the first reason information indicating why the UE fails to register with the visited network. Refer to related descriptions in the embodiment shown in FIG. 3. Details are not described herein again.

Specially, in the method for controlling an E-UTRA capability of UE provided in this embodiment of the present invention, the MME is an MME in the visited network in which the UE is located, and the HSS is an HSS in the home network of the UE. It may be understood that if the visited network in which the UE is located is the home network of the UE, both the MME and the HSS are located in the home network.

Optionally, for descriptions of the foregoing first indication information and the foregoing first reason information, refer to related descriptions in the embodiment shown in FIG. 1 and FIG. 2. Details are not described herein again.

Further, for specific descriptions of a meaning of a case in which the first indication information is used to instruct to disable the E-UTRA capability of the UE and a meaning of a case in which the first indication information is used to instruct to disable the E-UTRA capability of the UE in the visited network, refer to related descriptions in the embodiment shown in FIG. 1. Details are not described herein again.

Specifically, after receiving second reason information, the UE learns that a reason that the UE fails to register with the visited network is: the UE is not allowed to access the E-UTRAN in the visited network. In addition, the UE disables the E-UTRA capability of the UE according to the first indication information; or the UE disables the E-UTRA capability of the UE in the visited network, and enables the E-UTRA capability of the UE in an equivalent PLMN of the UE, according to the first indication information.

For explanations of the equivalent PLMN of the UE, refer to related descriptions in the embodiment shown in FIG. 1. Details are not described herein again.

Optionally, for descriptions of the first reason information and second indication information corresponding to the first reason information that are sent by the HSS to the MME, refer to related descriptions in the embodiment shown in FIG. 1. Details are not described herein again.

Optionally, if the MME receives the first reason information and the second indication information that are sent by the HSS, the MME may obtain the foregoing first indication information according to the first reason information and the second indication information. Specifically, the MME may learn, according to the first reason information, that a reason that the UE fails to register with the visited network is: no roaming agreement for allowing the UE to register with the E-UTRAN in the visited network is configured in the HSS, the MME may map the first reason information to the second reason information, and the MME may obtain the first indication information according to the second indication information and a correspondence between the second indication information and the first indication information.

For a method for obtaining, by the MME, the first indication information according to the second indication information and the correspondence between the second indication information and the first indication information, refer to related descriptions in the embodiment shown in FIG. 1. Details are not described herein again.

Optionally, if the MME receives the first reason information sent by the HSS, the MME may obtain the foregoing first indication information according to the first reason information. Specifically, the MME may obtain the first indication information from configuration information of the MME according to the first reason information.

Two implementation manners of obtaining, by the MME according to the first reason information, the first indication information corresponding to the first reason information have been described in detail in the embodiment shown in FIG. 1. Details are not described herein again.

It should be noted that if the second indication information is not configured in the HSS for the UE, the HSS may send, to the MME, the first reason information indicating why the UE fails to register; or if the second indication information is configured in the HSS for the UE, the HSS may send, to the MME, the first reason information indicating why the UE fails to register and the second indication information.

After the UE receives the first indication information sent by the MME, when the MO parameter is not configured, or when the MO parameter used to indicate that the UE is not allowed to disabling the E-UTRA capability of the UE is configured, the UE may disable the E-UTRA capability of the UE according to the first indication information. Specifically, for a method for disabling, by the UE, the E-UTRA capability of the UE according to the first indication information, refer to related descriptions in the embodiment shown in FIG. 2. Details are not described herein again.

In this embodiment of the present invention, for descriptions of the first reason information, the second reason information, the first indication information, and the second indication information, refer to related descriptions of the first reason information, the second reason information, the first indication information, and the second indication information in the embodiment shown in FIG. 1. Details are not described herein again.

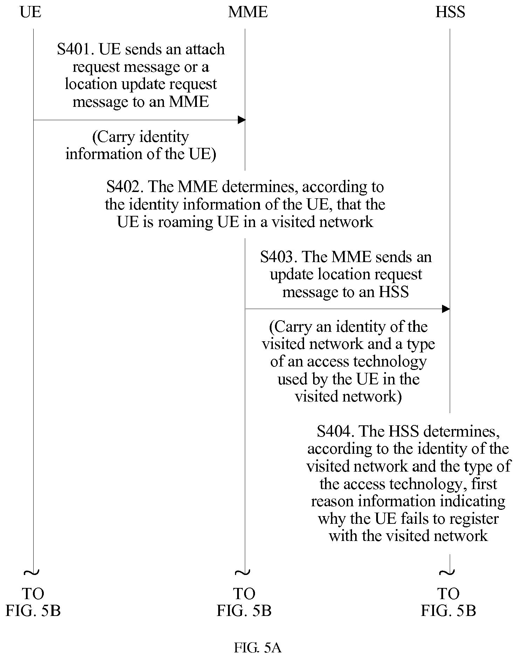

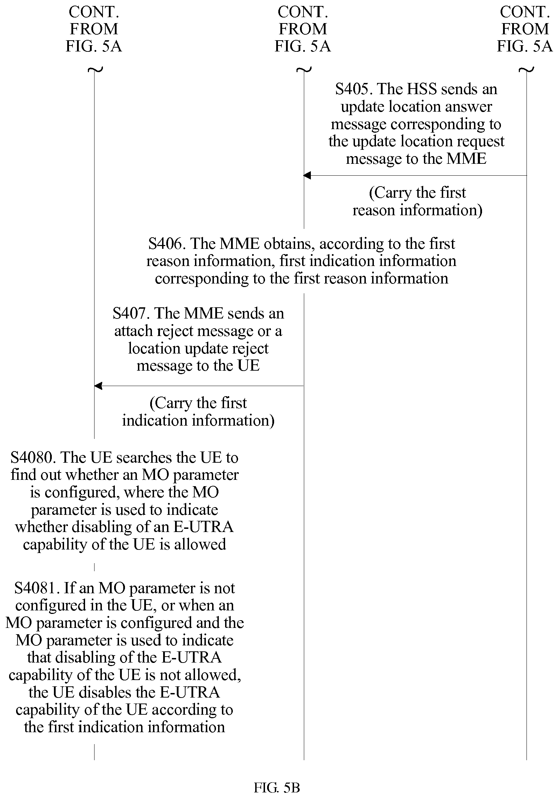

Further, as shown in FIG. 5B, S408 in the method for controlling an E-UTRA capability of UE provided in this embodiment of the present invention may further include the following steps:
S4080. The UE searches the UE to find out whether an MO parameter is configured, where the MO parameter is used to indicate whether disabling of the E-UTRA capability of the UE is allowed.
S4081. If the MO parameter is not configured in the UE, or when the MO parameter is configured and the MO parameter is used to indicate that disabling of the E-UTRA capability of the UE is not allowed, the UE disables the E-UTRA capability of the UE according to the first indication information.

It should be noted that the home operator of the UE may configure an MO parameter for the UE, and the MO parameter is used to indicate whether disabling of the E-UTRA capability of the UE is allowed. After the UE receives the second reason information indicating why the UE fails to register with the visited network, the UE may determine, according to the MO parameter, whether disabling of the E-UTRA capability of the UE is allowed. The second reason information may be that the UE is not allowed to access the E-UTRAN in the visited network.

Specifically, if the MO parameter is configured in the UE, and the MO parameter is used to indicate that disabling of the E-UTRA capability of the UE is not allowed, after receiving the first indication information, the UE disables the E-UTRA capability of the UE in the visited network, and enables the E-UTRA capability of the UE in the equivalent PLMN of the UE, according to the first indication information. If the MO parameter is configured in the UE, and the MO parameter is set as a parameter used to indicate that disabling of the E-UTRA capability of the UE is not allowed, after receiving the first indication information, the UE may disable the E-UTRA capability of the UE according to the first indication information. If the MO parameter is not configured in the UE, after receiving the first indication information, the UE may disable the E-UTRA capability of the UE according to the first indication information. A method for obtaining, by the UE, the E-UTRA capability of the UE according to the first indication information has been described in detail in the embodiment shown in FIG. 2. Details are not described herein again.

Optionally, if the MO parameter is configured in the UE, but the MO parameter is not set, that is, when the MO parameter is a default value, it may be considered that the MO parameter is used to indicate that disabling of the E-UTRA capability of the UE is not allowed, and after receiving the first indication information, the UE disables the E-UTRA capability of the UE in the visited network, and enables the E-UTRA capability of the UE in the equivalent PLMN of the UE, according to the first indication information.

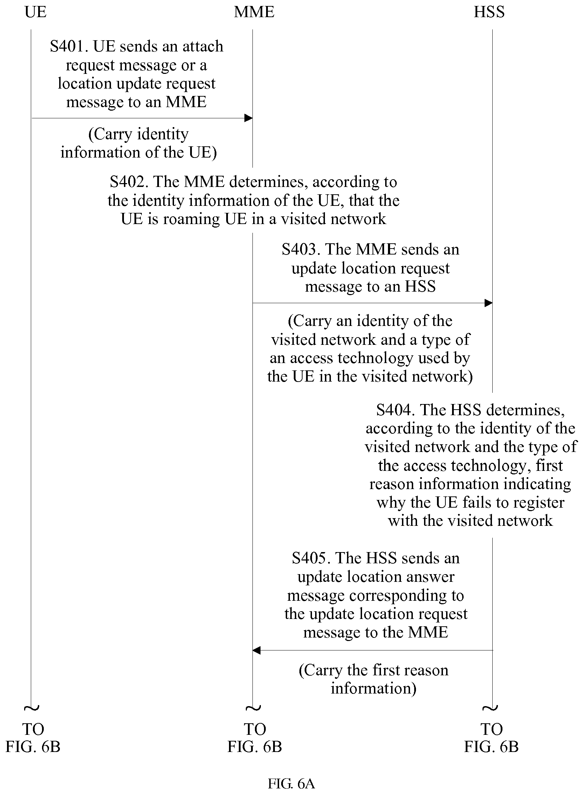

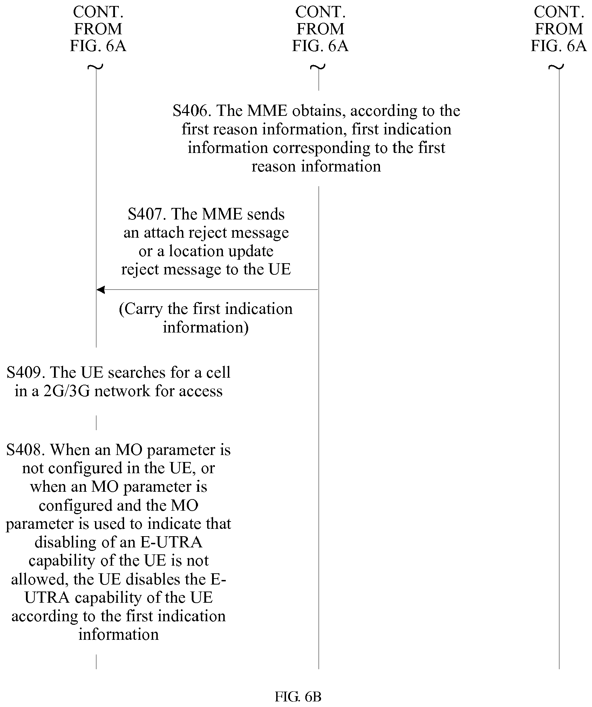

Further, as shown in FIG. 6B, in the method for controlling an E-UTRA capability of UE provided in this embodiment of the present invention, after S407, the method may further include the following steps:
S409. The UE searches for a cell in a 2G/3G network for access.

After the UE receives the first indication information carried in the attach reject message or the location update reject message sent by the MME, when the management object MO parameter is not configured for the UE, or when the MO parameter is configured and the MO parameter is used to indicate that disabling of the E-UTRA capability of the UE is not allowed, the UE may disable the E-UTRA capability of the UE according to the first indication information, and search for the cell in the 2G/3G network for access (search for a suitable cell in GERAN (global system for mobile communication enhanced data rate for GSM evolution radio access network) or UTRAN radio access technology). The cell accessed by the UE may be a cell in the 2G/3G network. For example, the cell may be a cell with strongest signal strength in the 2G/3G network. After the UE accesses the 2G/3G network, the UE may disable the E-UTRA capability of the UE according to the first indication information, so as to ensure that the UE can camp on the 2G/3G network in the visited network for a long time without returning to the E-UTRAN, thereby avoiding a problem of a ping-pong effect occurring on the UE.

Further, in this embodiment of the present invention, if the UE disables the E-UTRA capability of the UE, when the UE is in an idle state in the 2G/3G network in the visited network, signal measurement is not performed on an E-UTRA cell at a bottom layer of the UE. Therefore, compared with the prior art in which power consumption of the UE is increased because the E-UTRA cell needs to be measured at the bottom layer of the UE although the UE cannot register with the E-UTRA cell, the E-UTRA capability of the UE is disabled, so that unnecessary measurement performed by the UE on the E-UTRA cell can be avoided, and power consumption of the UE can be reduced.

This embodiment of the present invention provides a method for controlling an E-UTRA capability of UE. According to the solution, when UE fails to register with a visited network in which the UE is located, an MME may obtain first reason information indicating why the UE fails to register with the visited network, determine, according to the first reason information, first indication information corresponding to the first reason information, and send the first indication information to the UE, so as to instruct the UE to disable an E-UTRA capability of the UE when an MO parameter is not configured, or when an MO parameter used to indicate that disabling of the E-UTRA capability of the UE is not allowed, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

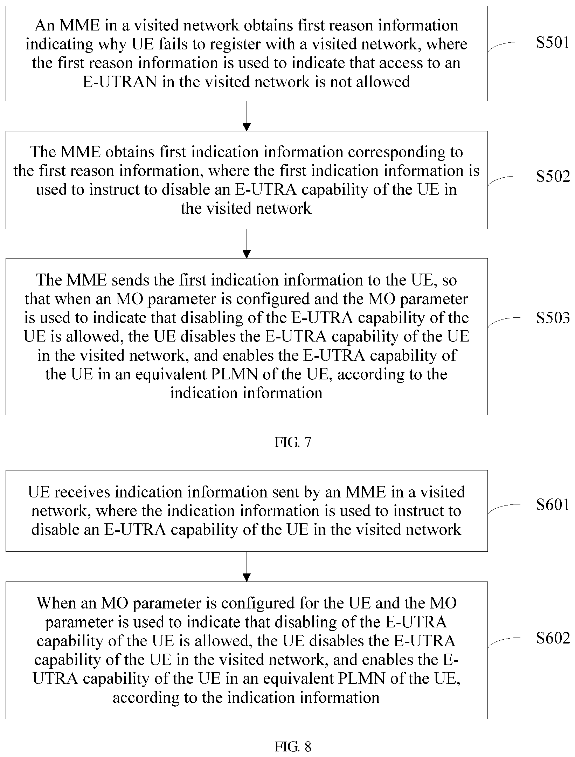

This embodiment of the present invention further provides another method for controlling an E-UTRA capability of UE. As shown in FIG. 7, the method may include the following steps:
S501. An MME in a visited network obtains first reason information indicating why UE fails to register with the visited network, where the first reason information is used to indicate that access to an E-UTRAN in the visited network is not allowed.
S502. The MME obtains first indication information corresponding to the first reason information, where the first indication information is used to instruct to disable an E-UTRA capability of the UE in the visited network.
S503. The MME sends the first indication information to the UE, so that when an MO parameter is configured and the MO parameter is used to indicate that disabling of the E-UTRA capability of the UE is allowed, the UE disables the E-UTRA capability of the UE in the visited network, and enables the E-UTRA capability of the UE in an equivalent PLMN of the UE, according to the indication information.

The method provided in this embodiment of the present invention is similar to the method shown in FIG. 1, and a difference lies in that conditions under which the UE disables the E-UTRA capability of the UE according to the first indication information are different. In the method provided in this embodiment of the present invention, when the MO parameter is configured for the UE and the MO parameter is used to indicate that disabling of the E-UTRA capability of the UE is allowed, the UE disables the E-UTRA capability of the UE in the visited network, and enables the E-UTRA capability of the UE in the equivalent PLMN of the UE, according to the first indication information. However, in the method shown in FIG. 1, when the MO parameter is not configured for the UE, or when the MO parameter is configured for the UE and the MO parameter is used to indicate that disabling of the E-UTRA capability of the UE is not allowed, the UE disables the E-UTRA capability of the UE according to the first indication information (or the UE may disable the E-UTRA capability of the UE in the visited network, and enable the E-UTRA capability of the UE in the equivalent PLMN of the UE, according to the first indication information).

Optionally, the another method for controlling an E-UTRA capability of UE provided in this embodiment of the present invention may further include:
sending, by the MME, second reason information to the UE, where the second reason information is used to indicate that access to the E-UTRAN in the visited network is not allowed.

Optionally, the second reason information includes: a reason value used to indicate that there is no suitable cell in a tracking area, and an extended reason value used to indicate that access to the E-UTRAN in the visited network is not allowed.

Optionally, the first reason information is obtained by the MME according to configuration information; or the first reason information is obtained from an HSS in a home network by the MME; or the first reason information and the first indication information are obtained from a HSS by the MME.

Optionally, the another method for controlling an E-UTRA capability of UE provided in this embodiment of the present invention may further include:
obtaining, by the MME, second indication information that is sent by an HSS in a home network and that corresponds to the first reason information. The second indication information is used to indicate: disabling of the E-UTRA capability of the UE is allowed; or disabling of the E-UTRA capability of the UE is not allowed; or the second indication information is empty.

That the MME obtains the first indication information corresponding to the first reason information includes: obtaining, by the MME, the first indication information according to the second indication information and a correspondence between the second indication information and the first indication information.

In the method provided in this embodiment of the present invention, for descriptions other than descriptions of a condition under which the E-UTRA capability of the UE is disabled, refer to specific descriptions in the embodiment shown in FIG. 1. Details are not described herein again.

This embodiment of the present invention provides another method for controlling an E-UTRA capability of UE. As shown in FIG. 8, the method may include the following steps:
S601. UE receives indication information sent by an MME in a visited network, where the indication information is used to instruct to disable an E-UTRA capability of the UE in the visited network.
S602. When an MO parameter is configured for the UE and the MO parameter is used to indicate that disabling of the E-UTRA capability of the UE is allowed, the UE disables the E-UTRA capability of the UE in the visited network, and enables the E-UTRA capability of the UE in an equivalent PLMN of the UE, according to the indication information.

The method provided in this embodiment of the present invention is similar to the method shown in FIG. 2, and a difference lies in that conditions under which the UE disables the E-UTRA capability of the UE according to the indication information are different. In the method provided in this embodiment of the present invention, when the MO parameter is configured for the UE and the MO parameter is used to indicate that disabling of the E-UTRA capability of the UE is allowed, the UE disables the E-UTRA capability of the UE in the visited network, and enables the E-UTRA capability of the UE in the equivalent PLMN of the UE, according to the indication information. However, in the method shown in FIG. 2, when the MO parameter is not configured for the UE, or when the MO parameter is configured and the MO parameter is used to indicate that disabling of the E-UTRA capability of the UE is not allowed, the UE disables the E-UTRA capability of the UE according to the indication information (or the UE may disable the E-UTRA capability of the UE in the visited network, and enable the E-UTRA capability of the UE in the equivalent PLMN of the UE, according to the indication information).

Optionally, the another method for controlling an E-UTRA capability of UE provided in this embodiment of the present invention may further include:
receiving, by the UE, reason information sent by the MME, where the reason information is used to indicate that the UE is not allowed to access an E-UTRAN in the visited network.

Optionally, after the UE receives the indication information sent by the MME, the another method for controlling an E-UTRA capability of UE provided in this embodiment of the present invention may further include:
searching for, by the UE, a cell in a 2G/3G network for access.

In the method provided in this embodiment of the present invention, for descriptions other than descriptions of a condition under which the E-UTRA capability of the UE is disabled, refer to specific descriptions in the embodiment shown in FIG. 2. Details are not described herein again.

This embodiment of the present invention provides another method for controlling an E-UTRA capability of UE. According to the solution, when UE fails to register with a visited network in which the UE is located, an MME may obtain first reason information indicating why the UE fails to register with the visited network, determine, according to the first reason information, first indication information corresponding to the first reason information, and send the first indication information to the UE, so as to instruct the UE to disable an E-UTRA capability of the UE when an MO parameter is configured and the MO parameter is used to indicate that disabling of the E-UTRA capability of the UE is allowed, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

### Embodiment 3

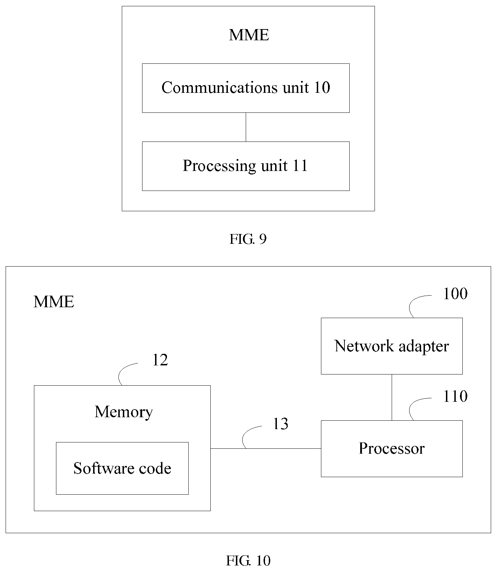

As shown in FIG. 9, this embodiment of the present invention provides an MME. The MME may include:
a communications unit 10, configured to interact with UE; and a processing unit 11, configured to: obtain first reason information indicating why the UE fails to register with a visited network, obtain first indication information corresponding to the first reason information, and send the first indication information to the UE by using the communications unit 10, so that when an MO parameter is not configured, or when the MO parameter is configured and the MO parameter is used to indicate that disabling of an E-UTRA capability of the UE is not allowed, the UE disables the E-UTRA capability of the UE according to the first indication information, where the first reason information is used to indicate that access to an E-UTRAN in the visited network is not allowed, and the first indication information is used to instruct to disable the E-UTRA capability of the UE.

Optionally, the processing unit 11 is further configured to send second reason information to the UE by using the communications unit 10, where the second reason information is used to indicate that access to the E-UTRAN in the visited network is not allowed.

Optionally, the second reason information sent by the processing unit 11 includes: a reason value used to indicate that there is no suitable cell in a tracking area, and an extended reason value used to indicate that access to the E-UTRAN in the visited network is not allowed.

Optionally, the first indication information sent by the processing unit 11 is specifically used to instruct to disable the E-UTRA capability of the UE in the visited network, so that the UE disables the E-UTRA capability of the UE in the visited network, and enables the E-UTRA capability of the UE in an equivalent PLMN of the UE.

Optionally, the communications unit 10 is further configured to interact with an HSS in a home network.

The first reason information is obtained by the processing unit 11 according to configuration information; or the first reason information is obtained from the HSS by the processing unit 11 by using the communications unit 10; or the first reason information and the first indication information are obtained from the HSS by the processing unit 11 by using the communications unit 10.

Optionally, the communications unit 10 is further configured to interact with an HSS in a home network.

The processing unit 11 is further configured to obtain, by using the communications unit 10, second indication information that is sent by the HSS and that corresponds to the first reason information. The second indication information is used to indicate: disabling of the E-UTRA capability of the UE is allowed; or disabling of the E-UTRA capability of the UE is not allowed; or the second indication information is empty.

The processing unit 11 is specifically configured to obtain the first indication information according to the second indication information and a correspondence between the second indication information and the first indication information.

Optionally, the second indication information is obtained from the HSS by the processing unit 11 by using an update location answer message; or the first reason information and the second indication information are obtained from the HSS by the processing unit 11 by using an update location answer message.

Optionally, the first reason information is obtained from the HSS by the processing unit 11 by using an update location answer message; or the first reason information and the first indication information are obtained from the HSS by the processing unit 11 by using an update location answer message.

Optionally, the first indication information is sent by the processing unit 11 to the UE by using an attach reject message/location update reject message; or the second reason information is sent by the processing unit 11 to the UE by using an attach reject message/location update reject message; or the first indication information and the second reason information are sent by the processing unit 11 to the UE by using an attach reject message/location update reject message.

It should be noted that for descriptions of the foregoing first indication information, the foregoing second indication information, the foregoing first reason information, and the foregoing second reason information, refer to related descriptions of the first indication information, the second indication information, the first reason information, and the second reason information in the embodiment shown in FIG. 1. Details are not described herein again.

Further, the foregoing communications unit 10 may be a network adapter disposed in the MME, or may be a circuit unit that has a transceiver function and that is disposed in the MME. The foregoing processing unit 11 may be a processor, a processor, a single-chip microcomputer, an application-specific integrated circuit (ASIC), or the like. For example, when the processing unit 11 is a processor, the processing unit 11 may be a processor independently disposed in the MME, or may be implemented by integration into a processor in the MME.

For example, as shown in FIG. 10, the communications unit 10 is a network adapter 100, and the processing unit 11 is a processor 110. The MME may further include a memory 12 and a system bus 13. The network adapter 100, the processor 110, and the memory 12 are connected and complete mutual communication by using the system bus 13. The processor 110 may execute, by using software code, the method procedure of controlling an E-UTRA capability of UE in the embodiment shown in FIG. 1 and the embodiment shown in FIG. 4. The software code may be stored in the memory 12, so that the processor 110 executes and invokes the software code stored in the memory 12, to complete the methods for controlling an E-UTRA capability of UE provided in the embodiments of the present invention.

This embodiment of the present invention provides an MME. When UE fails to register with a visited network in which the UE is located, the MME may obtain first reason information indicating why the UE fails to register with the visited network, determine, according to the first reason information, first indication information corresponding to the first reason information, and send the first indication information to the UE, so as to instruct the UE to disable an E-UTRA capability of the UE when an MO parameter is not configured, or when an MO parameter used to indicate that the UE is not allowed to disable the E-UTRA capability of the UE is configured, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

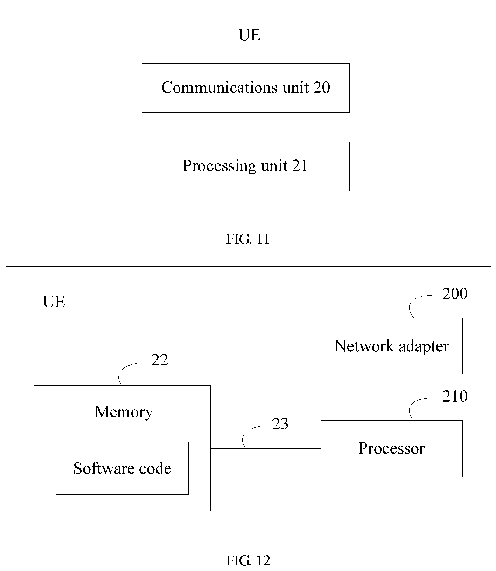

As shown in FIG. 11, this embodiment of the present invention provides UE. The UE may include:
a communications unit 20, configured to interact with an MME in a visited network; and a processing unit 21, configured to: receive, by using the communications unit 20, indication information sent by the MME; when an MO parameter is not configured for the UE, or when the MO parameter is configured and the MO parameter is used to indicate that disabling of an E-UTRA capability of the UE is not allowed, disable the E-UTRA capability of the UE according to the indication information, where the indication information is used to instruct to disable the E-UTRA capability of the UE.

Optionally, the indication information received by the processing unit 21 is specifically used to instruct to disable the E-UTRA capability of the UE in the visited network.

The processing unit 21 is specifically configured to disable the E-UTRA capability of the UE in the visited network according to the indication information.

The processing unit 21 is further configured to enable the E-UTRA capability of the UE according to the indication information when the UE is located in an equivalent PLMN of the UE.

Optionally, the processing unit 21 is further configured to receive, by using the communications unit 20, reason information sent by the MME, where the reason information is used to indicate that the UE is not allowed to access an E-UTRAN in the visited network.

Optionally, the processing unit 21 is further configured to: after receiving the indication information sent by the MME, search for a cell in a 2G/3G network for access.

Optionally, the indication information is received from the MME by the processing unit 21 by using an attach reject message/location update reject message; or the reason information is received from the MME by the processing unit 21 by using an attach reject message/location update reject message; or the indication information and the reason information are received from the MME by the processing unit 21 by using an attach reject message/location update reject message.

It should be noted that the indication information in this embodiment may be understood as the first indication information described in the foregoing embodiment shown in FIG. 1, and the reason information may be understood as the second reason information described in the foregoing embodiment shown in FIG. 1. For descriptions of the indication information and the reason information, refer to related descriptions of the first indication information and the second reason information in the foregoing embodiment shown in FIG. 1. Details are not described herein again.

Further, the foregoing communications unit 20 may be a network adapter disposed in the UE, or may be a circuit unit that has a transceiver function and that is disposed in the UE. The foregoing processing unit 21 may be a processor, a processor, a single-chip microcomputer, an ASIC, or the like. For example, when the processing unit 21 is a processor, the processing unit 21 may be a processor independently disposed in the UE, or may be implemented by integration into a processor in the UE.

For example, as shown in FIG. 12, the communications unit 20 is a network adapter 200, and the processing unit 21 is a processor 210. The UE may further include a memory 22 and a system bus 23. The network adapter 200, the processor 210, and the memory 22 are connected and complete mutual communication by using the system bus 23. The processor 210 may execute, by using software code, the method procedure of controlling an E-UTRA capability of UE in the embodiment shown in FIG. 2 and the embodiment shown in FIG. 4. The software code may be stored in the memory 22, so that the processor 210 executes and invokes the software code stored in the memory 22, to complete the methods for controlling an E-UTRA capability of UE provided in the embodiments of the present invention.

This embodiment of the present invention provides UE. When the UE fails to register with a visited network in which the UE is located, when an MO parameter is not configured for the UE, or when the MO parameter is configured and the MO parameter is used to indicate that disabling of an E-UTRA capability of the UE is not allowed, the UE may disable the E-UTRA capability of the UE according to first indication information sent by an MME, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability of the UE, and then the UE fails to register again. In this embodiment of the present invention, after the UE fails to register with the E-UTRAN in the visited network, the ping-pong effect occurring on the UE can be avoided by disabling the E-UTRA capability of the UE.

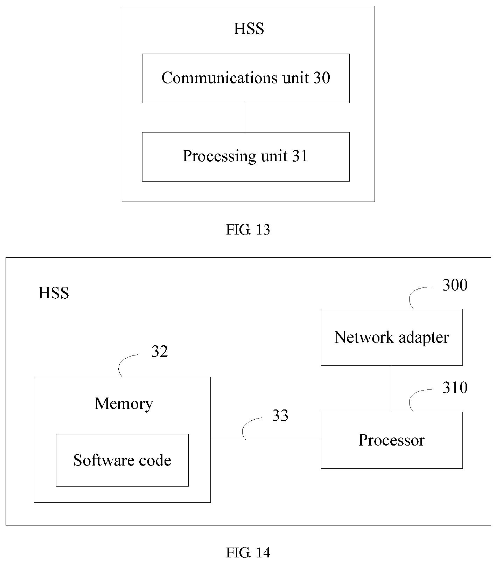

As shown in FIG. 13, this embodiment of the present invention provides an HSS. The HSS may include:
a communications unit 30, configured to interact with an MME; and a processing unit 31, configured to: obtain an identity of a visited network in which UE is located and a type of an access technology used by the UE in the visited network, where the identity of the visited network and the type of the access technology are sent by an MME, determine, according to the identity of the visited network and the type of the access technology, reason information indicating why the UE fails to register with the visited network, and send the reason information to the MME by using the communications unit 30.

Optionally, the processing unit 31 is further configured to send indication information corresponding to the reason information to the MME by using the communications unit 30. The indication information is used to indicate: disabling of an E-UTRA capability of the UE is allowed; or
disabling of an E-UTRA capability of the UE is not allowed; or the indication information is empty.

Optionally, the indication information is sent to the MME by the processing unit 31 by using an update location answer message; or the reason information and the indication information are sent to the MME by the processing unit 31 by using an update location answer message.

Optionally, the reason information is obtained from the HSS by the processing unit 31 by using an update location answer message.

Optionally, the processing unit 31 is specifically configured to: determine, according to the identity of the visited network and the type of the access technology, whether a roaming agreement for allowing the UE to register with an E-UTRAN in the visited network is configured in the HSS; and determine the reason information if the roaming agreement is not configured in the HSS.

Optionally, the reason information in this embodiment may be understood as the first reason information described in the foregoing embodiment, and the indication information may be understood as the second indication information described in the foregoing embodiment. For descriptions of the indication information and the reason information, refer to related descriptions of the first reason information and the second indication information in the foregoing embodiment shown in FIG. 1. Details are not described herein again.

Further, the foregoing communications unit 30 may be a network adapter disposed in the HSS, or may be a circuit unit that has a transceiver function and that is disposed in the HSS. The foregoing processing unit 31 may be a processor, a processor, a single-chip microcomputer, an ASIC, or the like. For example, when the processing unit 31 is a processor, the processing unit 31 may be a processor independently disposed in the HSS, or may be implemented by integration into a processor in the HSS.

For example, as shown in FIG. 14, the communications unit 30 is a network adapter 300, and the processing unit 31 is a processor 310. The HSS may further include a memory 32 and a system bus 33. The network adapter 300, the processor 310, and the memory 32 are connected and complete mutual communication by using the system bus 33. The processor 310 may execute, by using software code, the method procedure of controlling an E-UTRA capability of UE in the embodiment shown in FIG. 3 and the embodiment shown in FIG. 4. The software code may be stored in the memory 32, so that the processor 310 executes and invokes the software code stored in the memory 32, to complete the methods for controlling an E-UTRA capability of UE provided in the embodiments of the present invention.

This embodiment of the present invention provides an HSS. When UE fails to register with a visited network in which the UE is located, the HSS may obtain first reason information indicating why the UE fails to register with the visited network, and send the first reason information to an MME, so that the MME determines, according to the first reason information, first indication information corresponding to the first reason information, and sends the first indication information to the UE, so as to instruct the UE to disable an E-UTRA capability of the UE when an MO parameter is not configured, or when an MO parameter used to indicate that the UE is not allowed to disable the E-UTRA capability of the UE is configured, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

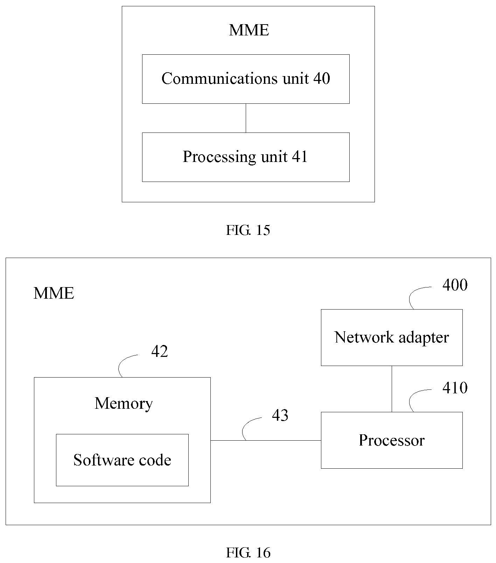

As shown in FIG. 15, this embodiment of the present invention further provides an MME. The MME may include:
a communications unit 40, configured to interact with UE; and a processing unit 41, configured to: obtain first reason information indicating why the UE fails to register with a visited network, obtain first indication information corresponding to the first reason information, and send the first indication information to the UE by using the communications unit 40, so that when an MO parameter is configured and the MO parameter is used to indicate that disabling of an E-UTRA capability of the UE is allowed, the UE disables the E-UTRA capability of the UE in the visited network, and enables the E-UTRA capability of the UE in an equivalent PLMN of the UE, according to the indication information, where the first reason information is used to indicate that access to an E-UTRAN in the visited network is not allowed, and the first indication information is used to instruct to disable the E-UTRA capability of the UE in the visited network.

Optionally, the processing unit 41 is further configured to send second reason information to the UE by using the communications unit 40. The second reason information is used to indicate that access to the E-UTRAN in the visited network is not allowed.

Optionally, the second reason information sent by the processing unit 41 includes: a reason value used to indicate that there is no suitable cell in a tracking area, and an extended reason value used to indicate that access to the E-UTRAN in the visited network is not allowed.

Optionally, the first indication information sent by the processing unit 41 is specifically used to instruct to disable the E-UTRA capability of the UE in the visited network, so that the UE disables the E-UTRA capability of the UE in the visited network, and enables the E-UTRA capability of the UE in the equivalent PLMN of the UE.

Optionally, the communications unit 40 is further configured to interact with an HSS in a home network.

The first reason information is obtained by the processing unit 41 according to configuration information; or the first reason information is obtained from the HSS by the processing unit 41 by using the communications unit 40; or the first reason information and the first indication information are obtained from the HSS by the processing unit 41 by using the communications unit 40.

Optionally, the communications unit 40 is further configured to interact with an HSS in a home network.

The processing unit 41 is further configured to obtain, by using the communications unit 40, second indication information that is sent by the HSS and that corresponds to the first reason information. The second indication information is used to indicate: disabling of the E-UTRA capability of the UE is allowed; or disabling of the E-UTRA capability of the UE is not allowed; or the second indication information is empty.

The processing unit 41 is specifically configured to obtain the first indication information according to the second indication information and a correspondence between the second indication information and the first indication information.

Optionally, the second indication information is obtained from the HSS by the processing unit 41 by using an update location answer message; or the first reason information and the second indication information are obtained from the HSS by the processing unit 41 by using an update location answer message.

Optionally, the first reason information is obtained from the HSS by the processing unit 41 by using an update location answer message; or the first reason information and the first indication information are obtained from the HSS by the processing unit 41 by using an update location answer message.

Optionally, the first indication information is sent by the processing unit 41 to the UE by using an attach reject message/location update reject message; or the second reason information is sent by the processing unit 41 to the UE by using an attach reject message/location update reject message; or the first indication information and the second reason information are sent by the processing unit 41 to the UE by using an attach reject message/location update reject message.

It should be noted that for descriptions of the foregoing first indication information, the foregoing second indication information, the foregoing first reason information, and the foregoing second reason information, refer to related descriptions of the first indication information, the second indication information, the first reason information, and the second reason information in the embodiment shown in FIG. 1. Details are not described herein again.

Further, the foregoing communications unit 40 may be a network adapter disposed in the MME, or may be a circuit unit that has a transceiver function and that is disposed in the MME. The foregoing processing unit 41 may be a processor, a processor, a single-chip microcomputer, an ASIC, or the like. For example, when the processing unit 41 is a processor, the processing unit 41 may be a processor independently disposed in the MME, or may be implemented by integration into a processor in the MME.

For example, as shown in FIG. 16, the communications unit 40 is a network adapter 400, and the processing unit 41 is a processor 410. The MME may further include a memory 42 and a system bus 43. The network adapter 400, the processor 410, and the memory 42 are connected and complete mutual communication by using the system bus 43. The processor 410 may execute, by using software code, the method procedure of controlling an E-UTRA capability of UE in the embodiment shown in FIG. 7. The software code may be stored in the memory 42, so that the processor 410 executes and invokes the software code stored in the memory 42, to complete the methods for controlling an E-UTRA capability of UE provided in the embodiments of the present invention.

This embodiment of the present invention provides an MME. When UE fails to register with a visited network in which the UE is located, the MME may obtain first reason information indicating why the UE fails to register with the visited network, determine, according to the first reason information, first indication information corresponding to the first reason information, and send the first indication information to the UE, and when an MO parameter is configured for the UE and the MO parameter is used to indicate that disabling of an E-UTRA capability of the UE is allowed, the UE disables the E-UTRA capability of the UE in the visited network, and enables the E-UTRA capability of the UE in an equivalent PLMN of the UE, according to the first indication information, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

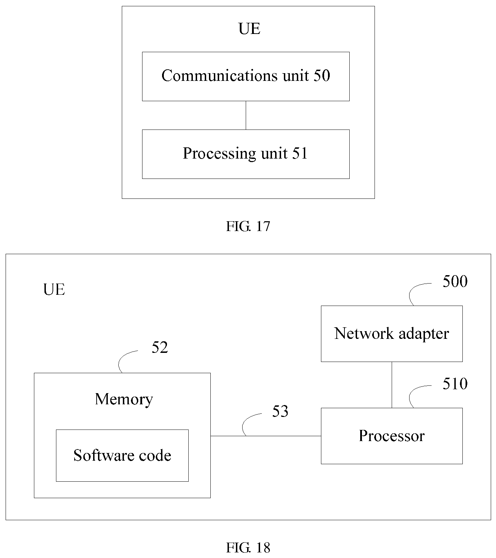

As shown in FIG. 17, this embodiment of the present invention further provides UE. The UE may include:
a communications unit 50, configured to interact with an MME; and a processing unit 51, configured to: receive, by using the communications unit 50, indication information sent by the MME in a visited network, and when an MO parameter is configured for the UE and the MO parameter is used to indicate that disabling of an E-UTRA capability of the UE is allowed, disable the E-UTRA capability of the UE in the visited network, and enable the E-UTRA capability of the UE in an equivalent PLMN of the UE, according to the indication information, where the indication information is used to instruct to disable the E-UTRA capability of the UE in the visited network.

Optionally, the processing unit 51 is further configured to receive, by using the communications unit 50, reason information sent by the MME, where the reason information is used to indicate that the UE is not allowed to access an E-UTRAN in the visited network.

Optionally, the processing unit 51 is further configured to: after receiving the indication information sent by the MME, search for a cell in a 2G/3G network for access.

Optionally, the indication information is received from the MME by the processing unit 51 by using an attach reject message/location update reject message; or the reason information is received from the MME by the processing unit 51 by using an attach reject message/location update reject message; or the indication information and the reason information are received from the MME by the processing unit 51 by using an attach reject message/location update reject message.

It should be noted that the foregoing indication information may be understood as the first indication information described in the foregoing embodiment shown in FIG. 1, and the foregoing reason information may be understood as the second reason information described in the foregoing embodiment shown in FIG. 1. For descriptions of the foregoing indication information and the foregoing reason information, refer to related descriptions of the first indication information and the second reason information in the foregoing embodiment shown in FIG. 1. Details are not described herein again.

Further, the foregoing communications unit 50 may be a network adapter disposed in the UE, or may be a circuit unit that has a transceiver function and that is disposed in the UE. The foregoing processing unit 51 may be a processor, a processor, a single-chip microcomputer, an ASIC, or the like. For example, when the processing unit 51 is a processor, the processing unit 51 may be a processor independently disposed in the UE, or may be implemented by integration into a processor in the UE.

For example, as shown in FIG. 18, the communications unit 50 is a network adapter 500, and the processing unit 51 is a processor 510. The UE may further include a memory 52 and a system bus 53. The network adapter 500, the processor 510, and the memory 52 are connected and complete mutual communication by using the system bus 53. The processor 510 may execute, by using software code, the method procedure of controlling an E-UTRA capability of UE in the embodiment shown in FIG. 2. The software code may be stored in the memory 52, so that the processor 510 executes and invokes the software code stored in the memory 52, to complete the methods for controlling an E-UTRA capability of UE provided in the embodiments of the present invention.

This embodiment of the present invention provides UE. When the UE fails to register with a visited network in which the UE is located, when an MO parameter is configured for the UE and the MO parameter is used to indicate that disabling of an E-UTRA capability of the UE is allowed, the UE may disable the E-UTRA capability of the UE in the visited network, and enable the E-UTRA capability of the UE in an equivalent PLMN of the UE, according to the first indication information sent by an MME, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

### Embodiment 4

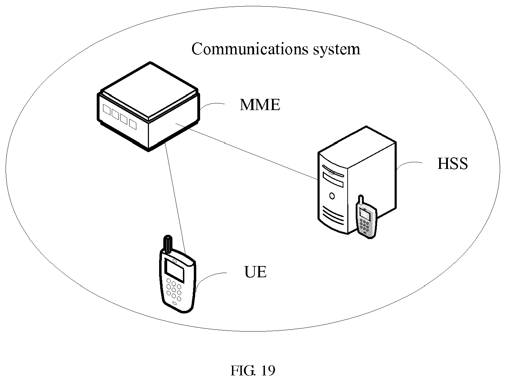

As shown in FIG. 19, this embodiment of the present invention provides a communications system, including the UE, the MME, and the HSS described in the foregoing Embodiment 3. By executing any one of method procedures shown in FIG. 1 to FIG. 6B, the UE, the MME, and the HSS complete a method for controlling an E-UTRA capability of UE provided in this embodiment of the present invention, or by respectively executing method procedures shown in FIG. 7, FIG. 8, and FIG. 3, the UE, the MME, and the HSS complete a method for controlling an E-UTRA capability of UE provided in this embodiment of the present invention.

Specifically, the HSS obtains an identity of a visited network in which the UE is located and a type of an access technology used by the UE in the visited network, where the identity of the visited network and the type of the access technology are sent by the MME, determines, according to the identity of the visited network and the type of the access technology, reason information indicating why the UE fails to register with the visited network, and sends the reason information to the MME. After the MME receives the reason information, the MME may obtain, according to the reason information, first indication information corresponding to the reason information, and send the first indication information to the UE, so that when an MO parameter is not configured for the UE, or when an MO parameter is configured and the MO parameter is used to indicate that disabling of an E-UTRA capability of the UE is not allowed, the UE disables the E-UTRA capability of the UE according to the first indication information. The first indication information is used to instruct to disable the E-UTRA capability of the UE.

Optionally, after the MME sends the first indication information to the UE, when the MO parameter is configured for the UE and the MO parameter is used to indicate that disabling of the E-UTRA capability of the UE is allowed, the UE disables the E-UTRA capability of the UE in the visited network, and enables the E-UTRA capability of the UE in an equivalent PLMN of the UE, according to the first indication information. The first indication information is used to instruct to disable the E-UTRA capability of the UE in the visited network.

According to the communications system provided in this embodiment of the present invention, when the system includes the MME described in the embodiment shown in FIG. 9, the UE described in the embodiment shown in FIG. 11, and the HSS described in the embodiment shown in FIG. 13, when the UE fails to register with a visited network in which the UE is located, the MME may obtain, from the HSS, first reason information indicating why the UE fails to register with the visited network, determine, according to the first reason information, first indication information corresponding to the first reason information, and send the first indication information to the UE. When an MO parameter is not configured, or when an MO parameter used to indicate that the UE is not allowed to disable an E-UTRA capability of the UE is configured, the UE disables the E-UTRA capability of the UE according to the first indication information, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. Alternatively, when the system includes the MME described in the embodiment shown in FIG. 15, the UE described in the embodiment shown in FIG. 17, and the HSS described in the embodiment shown in FIG. 13, when the UE fails to register with a visited network in which the UE is located, the MME may obtain, from the HSS, first reason information indicating why the UE fails to register with the visited network, determine, according to the first reason information, first indication information corresponding to the first reason information, and send the first indication information to the UE. When an MO parameter is configured for the UE and the MO parameter is used to indicate that disabling of an E-UTRA capability of the UE is allowed, the UE disables the E-UTRA capability of the UE in the visited network, and enables the E-UTRA capability of the UE in an equivalent PLMN of the UE, according to the first indication information, thereby resolving a problem that is of a ping-pong effect occurring on the UE and is caused by the following: When the UE fails to register with an E-UTRAN in the visited network and registers with another network in the visited network, the UE initiates registration with the E-UTRAN again because the UE has the E-UTRA capability, and then the UE fails to register again. In this embodiment of the present invention, after the UE fails to register with the E-UTRAN in the visited network, the ping-pong effect occurring on the UE can be avoided by disabling the E-UTRA capability of the UE.

It may be clearly understood by a person skilled in the art that, for the purpose of convenient and brief description, division of the foregoing function modules is used as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

In the embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a ROM, a RAM, a magnetic disk, or an optical disc.

## Claims

1. A method for controlling an evolved universal mobile telecommunications system territorial radio access, E-UTRA, capability of a user equipment, UE, performed by the UE, the method comprising:
**a.)** sending an attach request message or a location update request message carrying identity information of the UE to a mobility management entity, MME, in a visited network, wherein the attach request message and the location update request message are used to request registering with an evolved universal mobile telecommunication system territorial radio access network, E-UTRAN, in the visited network in which the UE is located (S401);
**b.)** receiving an attach reject message or a location update reject message, wherein the attach reject message and the location update reject message carry indication information sent by the MME in the visited network, wherein the indication information is used to instruct to disable the E-UTRA capability of the UE (S407);
**c.)** determining whether a management object, MO, parameter is configured for the UE, wherein the MO parameter is used to indicate whether disabling of the E-UTRA capability of the UE is allowed,
**c1.)** in case of yes in step **c.)**, determining whether the MO parameter is used to indicate that disabling of the E-UTRA capability of the UE is not allowed (S4080);
**c2.)** in case of yes in step **c1.)** or if no in step **c.)**, disabling the E-UTRA capability of the UE according to the indication information (S4081).

2. The method according to claim 1, wherein the indication information is used to instruct to disable the E-UTRA capability of the UE in the visited network; and the disabling the E-UTRA capability of the UE according to the indication information comprises:
∘ disabling the E-UTRA capability of the UE in the visited network according to the indication information;
wherein the method further comprises:
enabling the E-UTRA capability of the UE according to the indication information when the UE moves to an equivalent public land mobile network, PLMN, of the UE, wherein the equivalent PLMN of the UE refers to a PLMN included in an equivalent PLMN list stored by the UE and for the UE, all PLMNs in the equivalent PLMN list are equivalent when network selection, network reselection, cell selection, and cell reselection are to be performed.

3. User equipment, UE, comprising means configured to perform the steps of any of the methods according to claims 1 - 2.

## Patentansprüche

1. Verfahren zum Steuern einer E-UTRA-Funktion (Evolved Universal Mobile Telecommunications System Territorial Radio Access) einer Benutzereinrichtung (UE, User Equipment), durchgeführt durch die UE, wobei das Verfahren Folgendes umfasst:
a.) Senden einer Bindungsanforderungsnachricht oder einer Positionsaktualisierungsanforderungsnachricht, Identitätsinformationen der UE tragend, an eine Mobilitätsverwaltungseinheit (MME, Mobility Management Entity) in einem Fremdnetzwerk, wobei die Bindungsanforderungsnachricht und die Positionsaktualisierungsanforderungsnachricht verwendet werden, um Registrieren mit einem E-UTRA-Netzwerk (E-UTRAN, Evolved Universal Mobile Telecommunication System Territorial Radio Access Network) in dem Fremdnetzwerk, in dem sich die UE befindet, anzufordern (S401);
b.) Empfangen einer Bindungsablehnungsnachricht oder einer Positionsaktualisierungsablehnungsnachricht, wobei die Bindungsablehnungsnachricht und die Positionsaktualisierungsablehnungsnachricht von der MME im Fremdnetzwerk gesendete Indikationsinformationen tragen, wobei die Indikationsinformationen verwendet werden, um anzuweisen, die E-UTRA-Funktion der UE zu deaktivieren (S407);
c.) Bestimmen, ob ein Verwaltungsobjektparameter (MO, Management Object) für die UE ausgelegt ist, wobei der MO-Parameter verwendet wird, um anzuzeigen, ob Deaktivieren der E-UTRA-Funktion der UE gestattet ist,
c1.) im Fall von Ja in Schritt c.), Bestimmen, ob der MO-Parameter verwendet wird, um anzuzeigen, dass Deaktivieren der E-UTRA-Funktion der UE nicht gestattet ist (S4080);
c2.) im Fall von Ja in Schritt c1.) oder bei Nein in Schritt c.), Deaktivieren der E-UTRA-Funktion der UE entsprechend den Indikationsinformationen (S4081).

2. Verfahren nach Anspruch 1, wobei die Indikationsinformationen verwendet werden, um anzuweisen, die E-UTRA-Funktion der UE im Fremdnetzwerk zu deaktivieren; und wobei Deaktivieren der E-UTRA-Funktion der UE entsprechend den Indikationsinformationen Folgendes umfasst:
- Deaktivieren der E-UTRA-Funktion der UE im Fremdnetzwerk entsprechend den Indikationsinformationen; wobei das Verfahren ferner Folgendes umfasst:
Aktivieren der E-UTRA-Funktion der UE entsprechend den Indikationsinformationen, wenn sich die UE in ein äquivalentes öffentliches terrestrisches Mobilfunknetzwerk (PLMN, Public Land Mobile Network) der UE bewegt, wobei sich das äquivalente PLMN der UE auf ein PLMN bezieht, das in einer Liste mit äquivalenten PLMN enthalten ist, die durch die UE und für die UE gespeichert wird, wobei alle PLMN in der Liste mit äquivalenten PLMN äquivalent sind, wenn Netzwerkauswahl, Netzwerkneuauswahl, Zellenauswahl und Zellenneuauswahl durchzuführen sind.

3. Benutzereinrichtung , UE, umfassende Mittel, die dazu ausgelegt sind, die Schritte aus einem der Verfahren nach Ansprüchen 1 - 2 durchzuführen.

## Revendications

1. Procédé pour commander une capacité d'accès radio terrestre de système de télécommunication mobile universel évolué (E-UTRA) d'un équipement utilisateur (UE), réalisé par l'équipement utilisateur, le procédé consistant :
**a.)** à envoyer un message de demande de rattachement ou un message de demande de mise à jour de localisation comportant des informations d'identité de l'équipement utilisateur à une entité de gestion de mobilité (MME) dans un réseau visité, dans lequel le message de demande de rattachement et le message de demande de mise à jour de localisation sont utilisés pour demander un enregistrement avec un réseau d'accès radio terrestre de système de télécommunication mobile universel évolué (E-UTRAN) dans le réseau visité dans lequel l'équipement utilisateur est localisé (S401) ;
**b.)** à recevoir un message de rejet de rattachement ou un message de rejet de mise à jour de localisation, dans lequel le message de rejet de rattachement et le message de rejet de mise à jour de localisation comportent des informations d'indication envoyées par l'entité MME dans le réseau visité, dans lequel les informations d'indication sont utilisées pour donner comme instruction de désactiver la capacité d'accès E-UTRA de l'équipement utilisateur (S407) ;
**c.)** à déterminer si un paramètre d'objet de gestion (MO) est configuré ou non pour l'équipement utilisateur, dans lequel le paramètre d'objet MO est utilisé pour indiquer si la désactivation de la capacité d'accès E-UTRA de l'équipement utilisateur est permise ou non,
**c1.)** dans le cas d'un oui à l'étape c.), à déterminer si le paramètre d'objet MO est utilisé ou non pour indiquer que la désactivation de la capacité d'accès E-UTRA de l'équipement utilisateur n'est pas permise (S4080) ;
**c2.)** dans le cas d'un oui à l'étape **c1**.**)** ou si c'est non à l'étape **c.)**, à désactiver la capacité d'accès E-UTRA de l'équipement utilisateur en fonction des informations d'indication (S4081).

2. Procédé selon la revendication 1, dans lequel les informations d'indication sont utilisées pour donner comme instruction de désactiver la capacité d'accès E-UTRA de l'équipement utilisateur dans le réseau visité ; et la désactivation de la capacité d'accès E-UTRA de l'équipement utilisateur en fonction des informations d'indication consiste :
∘ à désactiver la capacité d'accès E-UTRA de l'équipement utilisateur dans le réseau visité en fonction des informations d'indication ;
dans lequel le procédé consiste en outre :
à activer la capacité d'accès E-UTRA de l'équipement utilisateur en fonction des informations d'indication lorsque l'équipement utilisateur se déplace dans un réseau mobile terrestre public (PLMN) équivalent de l'équipement utilisateur, dans lequel le réseau PLMN équivalent de l'équipement utilisateur se réfère à un réseau PLMN inclus dans une liste de réseaux PLMN équivalents stockée par l'équipement utilisateur et pour l'équipement utilisateur, tous les réseaux PLMN dans la liste de réseaux PLMN équivalents sont équivalents lorsqu'une sélection de réseau, une resélection de réseau, une sélection de cellule et une resélection de cellule doivent être réalisées.

3. Équipement utilisateur (UE) comprenant des moyens configurés pour réaliser les étapes de l'un quelconque des procédés selon les revendications 1 et 2.
